# EUROPEAN PATENT APPLICATION

(11) **EP 3 163 467 A1**
(43) Date of publication of application: **03.05.2017**
(21) Application number: 15192268.9
(22) Date of filing: 30.10.2015
(51) Int. Cl.: G06F 17/30

(54) **METHOD AND TOOL FOR THE AUTOMATIC REFORMULATION OF SEARCH KEYWORD STRINGS IN DOCUMENT SEARCH SYSTEMS**

(71) Applicant: BIGFLO s.r.l., 24044 Dalmine (BG) (IT)
(72) Inventor: Russo, Davide, 50122 Firenze (IT); Montecchi, Tiziano, 50026 San Casciano in Val di Pesa (FI) (IT); Facoetti, Giancarlo, 24066 Pedrengo (BG) (IT); Mariani, Maurizio, 20134 MIlano (IT)
(74) Representative: Karaghiosoff, Giorgio Alessandro

(57) **Abstract**

Method for the automatic reformulation of search keyword strings (query) in document search systems that comprises the steps of: formulating the query in a functional manner in the form of verb + object pair or object + verb pair in a natural human language; carrying out a step expanding the verb + object pair or the object + verb pair consisting in the automatic analysis of said pair and in calculating the verb + object or object + verb alternative pairs; generating a set as a list or the like of verb + object or object + verb alternative pairs; creating a ranking of said pairs by assigning a weight to each pair, which weight is determined on the basis of the occurrence of the individual pair in the documents identified by carrying out the search on the basis of at least one of said pairs; generating a query with a number of alternative terms as regards the object and/or the verb that in the condition matched with each other produce the highest number of document occurrences, that is documents having such pair and that can be freely selected and matched by the user; generating a user graphical interface showing the pairs of terms "object" and "verb" generated at the previous step and/or the verb + object or object + verb alternative pairs generated at the previous step in the form of graphical entities that can be selected and used as document search input queries.

## Description

The present invention relates to a method and tool for the automatic reformulation of search keyword strings in document search systems.

Systems for performing document searches, such as particularly searches in the field of patent or non-patent document collections or libraries, provide the possibility of entering one or more keywords related by Boolean operators which are used for scanning documents or parts thereof in order to identify the documents corresponding to the set keyword string.

Such systems have the drawback of not considering semantics and therefore the meaning of the terms, but the less developed forms only identify the presence of the individual elements of the keyword string within the document even if used with no logical relation with each other.

The problems of document search are particularly important in the patent field. In this field the number of documents is huge and is constantly increasing. The fact of precisely identifying the relevant document is considerably important since legal right conditions depend on the quality and on the relevance of the identified documents, such as patentability and therefore the access to an exclusive right, the freedom of action and the patent validity of a patent application. The experts in this field agree that currently it is not possible to perform searches that can be considered as absolutely complete (Alberts, Yang et al. 2011) by using the current systems with keywords.

The main drawbacks related to keywords are:
Different detail levels of patent descriptions. Besides the fact that the same concepts can be expressed in different manners, moreover in this case a considerable importance resides in the fact that in the descriptions both terms of common use and terms specific of the technical field are present and that there are also cultural differences for people coming from different geographical areas. Not least, in patent descriptions the expressive style often is intentionally vague in order to hide at least a part of the more specific technical contents or in order to extend the scope of protection.

Inaccurate terminologies: in patents often the meaning of the words is modified from the ordinary meaning of definitions in dictionaries. Moreover sequences of functional steps are often identified by summarizing definitions that express the individual steps in an implicit manner.

Different official languages: the alternative use of different official languages further complicates the situation both for the fact that different languages express the concepts in a different manner, and because human or automatic translations can be wrong.

A quantitative idea of the limits of a search by keywords is given by the document Russo, Davide, Tiziano Montecchi, and Ying Liu. "Functional-based search for patent technology transfer." ASME 2012 International Design Engineering Technical Conferences and Computers and Information in Engineering Conference. American Society of Mechanical Engineers, 2012.

In this study the class A61L12 has been manually analysed. The result was that at least 12% of the documents classified therein cannot be reached due to the use of generic terms, such as "object" or super-technical terms such as "hydrophilic surface".

Therefore the present invention particularly aims at document searches in the patent field, i.e. in patent databases. In this field the use of effective tools for identifying a representative pool of documents/patents is particularly important for generating concise mapping of the prior art related to a certain product or a certain technology; identifying the so called white spaces, that is technological fields not protected yet and therefore that promise opportunities for technological transfers; planning a forecasting activity; supporting analyses of priority and of extraction of specific knowledge; supporting the generation of innovative and design ideas.

However it has to be pointed out that the described and claimed method and tool or the system are not limited only to the problem of finding patent documents, but they extend also to methods and systems for identifying and retrieving any type of document that is classified or available by an accessible database.

Moreover in the description below and in the examples of the description, even if the method is mainly described with reference to a Verb+Object pair, it is possible to use, with no substantial changes, also an Object+verb pair, both as an alternative and in a sequence or parallel combined process.

Moreover even if the examples are limited to the use of only one language, the invention provides as a query expansion the possibility to operate as an alternative or in parallel also with other languages by translating the terms of the verb+object pair or object+verb pair in one or more different further languages and by operating with the expansion terms by translation similarly to the terms obtained by other types of query expansion processes.

A more developed system is described in the patent application GE2010A000138 whose contents is considered as a part of the present description.

Such system described in GE2010A000138 is an interface system, particularly for organizing knowledge for predictive activities, comprising a computer composed of processing means and processor means for executing a logic program, at least one storage unit, at least one display unit and at least one input/output interface for entering data for executing said logic program. The execution of the logic program causes the computer to operate by displaying a hierarchical mapping of documents, obtained by processing data stored within said storage unit, and alphanumerical commands entered by a user, in the form of a natural human language, through said input/output interface, by a sequence of request windows generated by said logic program, the data being stored and said alphanumerical commands being processed according to predetermined logic rules and rules for construction of the natural human language expression.

In such system, the setting of the search criteria, that is the keyword string called also as query in the jargon of the field, was carried out in a semi-automatic manner in an interaction between system and user.

Typically the system comprised the following steps:
Formulating the technical problem to be solved by entering the alphanumerical commands by a user, in the form of a text in natural human language,
Analysing the text by means of said processing means and processor means and finding the keywords within the text by a user,
Automatically reformulating the keywords by the processing means through further keywords.

On the basis of the reformulated problem the system interrogated the database and it generated a hierarchical mapping of technical documents organized on the basis of said further keywords.

In the known system, the analysis of the reformulations performed by the processing means are carried out on the basis of relations and semantic and lexical rules of the terms used as keywords that in turn are based on known databases that have linguistic relations therein and that can be loaded into the storage unit.

Even if the results of the known system are more performing than what is obtained by the normal search systems, the drawback of providing to the user a high amount of data to be analyzed has not been completely solved. Moreover the known system does not have an effective and systematic organization of the results that guide even the unskilled user towards the identification of the target information sources since being the most relevant to the query, but they simply provide him/her all the suggested solutions.

This drawback involves a given amount of "noise" in the output data and it requires the user to perform a further analysis of the obtained results. Accordingly the user has to be technically prepared in order to perform such analysis and to use completely the potentialities of such tools.

Moreover the presentation of the results is not much clear and it does not help the user in the final analysis activity for identifying information relevant to its requests.

Therefore the invention aims at improving the step identifying information documents by improving and by further automatizing the step defining the keyword string as well as its use in the search steps.

Moreover the invention aims at generating a data output interface that is of the interactive graphical type and that allows the user to interact in a better way with the system to find the best query.

A solution for overcoming the problems described above and for improving the system while obtaining a set of documents with a high "recall" and a high precision provides to operate according to a functional search method that considers not only the individual keyword, but the Object+Verb pair (O+V) or as an alternative the Verb + Object pair (V +O).

The V+O pair is an optimal meaning disambiguation tool but it needs a strong expansion of both of them. This system has been tested as being very efficacious but it has considerable problems in handling hundreds of generated words that:
- makes it difficult the manual process controlling the query avoiding to distinguish which words in the expanded query carry only noise from those words that on the contrary carry good results. (usually some words of the verb extension matched with the words of the object extension have a zero result and they are desired to be eliminated from the query).
- too much rich queries are difficult to be transcribed in search forms of patent providers; in other ones the providers have limits in the number of words that can be entered in the search motor. (e.g. Espacenet for the search has a limit of maximum 10 words).
- a too much bulky query complicates possible actions automatizing the system, it makes the calculation heavy and it obliges to find compromises with the increase of the query expansion to limit the number of all the possible permutations between v+o pairs
- a too much extended query causes problems in displaying the query itself.

The invention solves the problems mentioned above by a method for the automatic reformulation of search keyword strings (query) in document search systems that comprises the steps of:
Formulating the query in a functional manner in the form of verb + object pair or object + verb pair in a natural human language;
Carrying out a step expanding the verb + object pair or the object + verb pair consisting in the automatic analysis of said pair and in calculating the verb + object or object + verb alternative pairs;
Generating a set as a list or the like of verb + object or object + verb alternative pairs;
Creating a ranking of said pairs by assigning a weight to each pair, which weight is determined on the basis of the occurrence of the individual pair in the documents identified by carrying out the search on the basis of at least one of said pairs;
Generating a query with a number of alternative terms as regards the object and/or the verb that in the condition matched with each other produce the highest number of document occurrences, that is documents having such pair and that can be freely selected and matched by the user;
Generating a user graphical interface showing the terms "object" and "verb" generated at the previous step and/or the verb + object or object + verb alternative pairs generated at the previous step in the form of graphical entities that can be selected and used as document search input queries.

In other words, compared to prior art, the method and the system according to the present invention give a weight to each V+O or O+V pair, and create a ranking of the pairs such to have the complete (quantitative) control of the V+O or O+V expansion.

The novelty is that this is carried out not on the occurrence of the individual word within the starting pool, but this is carried out on the V+O or O+v pair.

With an input as V+O or O+V a new query is produced with a number of terms that can be selected by the user and that provides only those terms that once suitably matched with the respective verb and corresponding expansion (for objects) or object and corresponding expansion (for verbs) produce the highest number of occurrences.

Such query is offered in an interactive graphical form easy to be understood and to be managed and that can be interfaced with other libraries for a problem-solving oriented automatic classification.

According to one embodiment, the method as the INPUT provides a user query composed of 2 words (a verb and an object or an object and a verb). The OUTPUT is a sequence of at least 2 words (verb+object or object + verb + other possible ones) that replace the input words since they are potentially more relevant to the desired search. A report is added with the recommended choices to construct the query, an infographics page.

According to a further characteristic the method provides to calculate the relevance mainly by counting the occurrences of each V+O or O+V pair in the documents in the pool of documents in a document database where the search is desired to be carried out.

According to an improvement in order to improve the precision it is possible to add alternatively or in combination one or more of the following filters: semantic filters such as parser, more selective filters such as Stop words, filters with text mining tools (tdf/idf and the like), relevance feedback based on the words suggested by clustering or combinations of all such systems.

Advantageously the software platform is selected such that it can have the access to the network, launch searches on any patent (and non-patent) provider, or local manner (desktop version) by making available a suitable document database.

One embodiment of the method provides that as regards the so called query expansion, that is the fact of defining the alternative terms for the verb and/or the object, it is carried out on a criterion replacing the V+O pair or O+V pair in INPUT by a ranking algorithm that assigns, to each pair alternative to the starting one, a value proportional to the number of times the pair appears in the document pool of the search database since a weight, that is a higher ranking, is assigned to the pairs that appear more times in the whole document pool of the searched database.

Still according to a further characteristic, the verb and object pairs or vice versa are selected by the user, manually, from a list of homonyms with different semantic meanings and then on the basis of the interrogation of one or more libraries.

It is possible to use different libraries and according to one improvement of the invention a library of the physical effects described by the verb and/or object is also interrogated.

The displaying of the output is composed of a list of pairs composed of the several permutations of alternative terms of verb and/or alternative terms of object for the verb+object and/or object+ verb pair in which list the pairs according to the several permutations are hierarchically ordered on the basis of the number of occurrences measured in the set (pool) of documents of the interrogated database.

The list can be subjected to a filtering of non-significant pairs based on filters that can be provided for the filtering step.

According to an improvement, on the basis of the list a graphical report is generated showing the pair with the highest ranking and contemporaneously or alternatively, automatically or by a selection, infographics of the distribution of ranking scores for the individual pairs, statistics, charts supporting the query are generated as regards the set of words having the highest influence.

According to a further advantageous improvement, the method provides the further step generating an interactive graphical interface for helping in the reformulation of the query terms, that is the verb+object or object+verb pairs, by suggesting new terms expanding the pairs composing the query and by showing the occurrences thereof in an interactive chart.

A page composed of interactive charts helps in reformulating the query by suggesting new terms for extending or replacing it, showing the number of results in terms of occurrences of the verb+object or object+verb pair that can be obtained with each one of the suggested terms or a series of combinations thereof and showing the results of the search in the interactive infographics.

By interacting with infographics the query can be modified and the system calculates again automatically the results in terms of occurrences. A suitable page of the screen always shows the first results of the search, which can be selected with different manners (ordered by relevance or by showing the results that have changed due to the last modification to the query, or on the contrary by showing only the patents removed from the pool due to the last modification made).

From the above it is clear that the verb+object or object+verb functional pair allows the recall of the results to be increased by the fact that they identify the concept hidden behind the words and allow the query to be extended to all the words that can be related to the concept.

Such mode allows a considerably greater recall to be provided such as described in the document Semantic expansion of the query. Taken from (Montecchi, Tiziano, Davide Russo, and Ying Liu. "Searching in Cooperative Patent Classification: Comparison between keyword and concept-based search." Advanced Engineering Informatics 27.3 (2013): 335-345.) for example it has been possible to verify that in the technical field of A61112 class it is possible to identify 238 documents out of 1.207 (recall 20%) by using a manual process, while by using semantic expansion 994 documents out of 1207 can be identified with a recall of 82%.

Therefore the invention solves also the problem that as regards recall the greater the range of the extension is (both in terms of increased generality and in terms of higher specificity) the more effective a query expansion is. However as recall increases and by introducing in OR much more terms inevitably a lot of noise is generated and therefore precision drastically decreases.

Starting from the assumption that a patent object can be hidden by new, inaccurate terminology or by neologisms, it is preferable to base the search strategy on identifying the function since it is more difficult to hide the functional part of the invention, that is of technology. Most of the times the functional part coincides with a verb that describes what is the use of the device described in the patent and how it is able to achieve the stated aim.

By making a search only by using function-related keywords the search precision would be very low, and moreover great homonymy problems would arise. For example it would not be possible to distinguish between "to sterilize" intended as "to render sterile" instead of "to sterilize" intended as "to destroy bacteria".

The V+O or O+V pair is the minimum search form, it alone can already improve searches since it gives a precise role to the meaning of the verb, limiting the range of the function and by defining whether the target is the searched one or on the contrary whether the patent or the document is not relevant. For example in the sterilization field it is different to search for the words "sterilize" and "lens" as separated or as a pair, unfortunately by the simple query "sterilize and lens" a great number of non relevant patents is found since they are about sterilization of the lens container.

Moreover the search for V+O or O+V pairs is itself a very effective disambiguation tool. For example with reference to the example mentioned above, "sterilize" can be intended as "desex" or "clean" but if searched for as a pair with the object "contact lens", it will find very accurately only those documents about cleaning excluding most of the patents about desexualization since it has no sense to patent a device for desexing lenses. Likewise with the object "human" we obtain the opposite and we exclude the cleaning from the pool of desexualization systems.

In another example "nut" can be a bolt or a walnut, but if it is searched in combination with the verb "to crack" it will find very accurately only those documents about walnuts excluding most of the documents about bolts since it has not much sense to patent devices for cracking bolts. Likewise for the verb "screw" we obtain the opposite effect and walnuts are excluded from the pool of bolt screwing systems.

The invention has further improvements that are the subject matter of the subclaims.

The characteristics and the advantages deriving therefrom will be more clear from the following description of some embodiments shown in the annexed drawings wherein:
Figure 1 is a flow chart of the method according to the present invention;
Figures 2 and 3 are the graphical interfaces of the three steps identified in the flow chart of figure 1;
Figure 4 is an interactive graphical representation of the distribution of the occurrences of the individual terms in the starting pool. In the top left part we see how by clicking on "Clean" it is possible to see the results of the distribution of the occurrences obtained by conjugating the term "clean". Likewise for the Object there is the singular and plural declension.
Figure 5 is the screenshot for sending the query to step 2 of the flow chart according to figure 1.
Figures 6 and 7 are the graphical representation interfaces of the query expansion step by interrogating/coupling the physical effect from a database of physical effects.
Figures 8 and 9 are a user graphical interface for the selection of the covering or recall level of the sample.
Figures 10 to 15 are a further variant of the automatic, interactive graphical representation interface for the words most relevant to the search, with in the center the winning pair, that is that one having the highest number of occurrences. To each bubble the words of the expansion are connected with the number of additional documents that they brought matched with the reference word.
Figure 16 is the graphical representation interface for the result in the form of a ranking list of the V+O pairs and the functions testing the stability of the ranking of the pairs by means of several operators.
Figure 17 is a graphical interface variant than the one of figure 16.
Figure 18 is a variant of the graphical interface of the database of the effects with respect to example of figures 6 and 7.
Figure 19 is an example of the graphical interface of the result of the expansion of verb and object.
Figure 20 is a popup window that is activated by interacting with the areas of each word provided in the interface of figure 19.

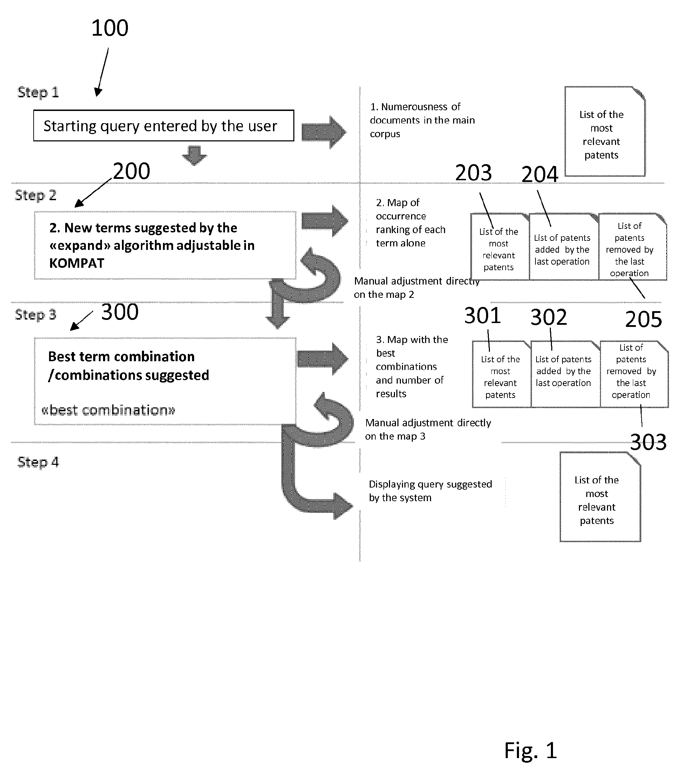

Figure 1 shows a flow chart of the method according to the present invention which is carried out by means of a tool or a system.

The system as the INPUT has a user query composed of two words (a verb and an object). The OUTPUT is a sequence of at least 2 words ((verb + object) + other possible ones) that replace the input words since being potentially more relevant to the desired search. A report is added with the choices suggested for constructing the query, an infographics page.

In one embodiment, at step 1 denoted by 100 the user manually enters a starting query composed of two keywords that are a verb and an object respectively.

The starting query is used for carrying out a search of the most relevant documents and list of documents within a document database.

At the following step denoted by 200 the method provides to identify the terms set by the user by means of an expansion algorithm.

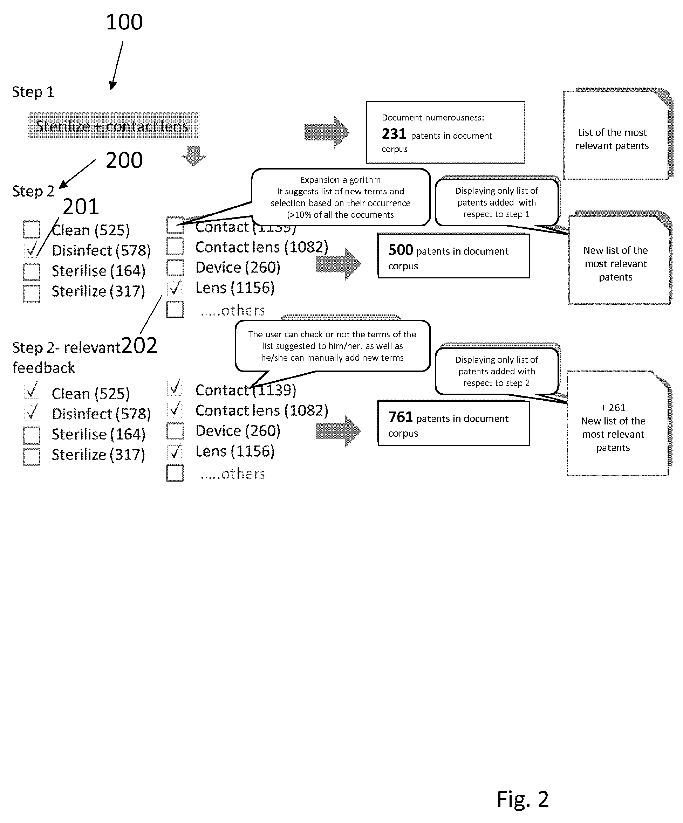

Figure 2 shows steps 100 and 200 in more detail. The starting query provided by the user in the example is the term "Sterilize" and "Contact Lens".

The term expansion algorithm acts both on the verb and on the object but is a separated manner one from the other by providing a list of alternative terms. It is possible now for the user to select by a check as denoted by 201, 202 one or more alternative terms for the verb and the object respectively.

Moreover when suggesting the alternative terms such as for example shown besides the alternative checked verb "Disinfect" or the term "Lens", the occurrences are shown, that is how many times the term appears in all the documents of the database.

During such step 2, the expansion and the occurrence is determined separately for the verb and for the object. Therefore by the use of the new combination of terms it is possible to find the number of documents added to the list of documents determined at step 1 and/or possibly also the number of documents removed from the list of step 1.

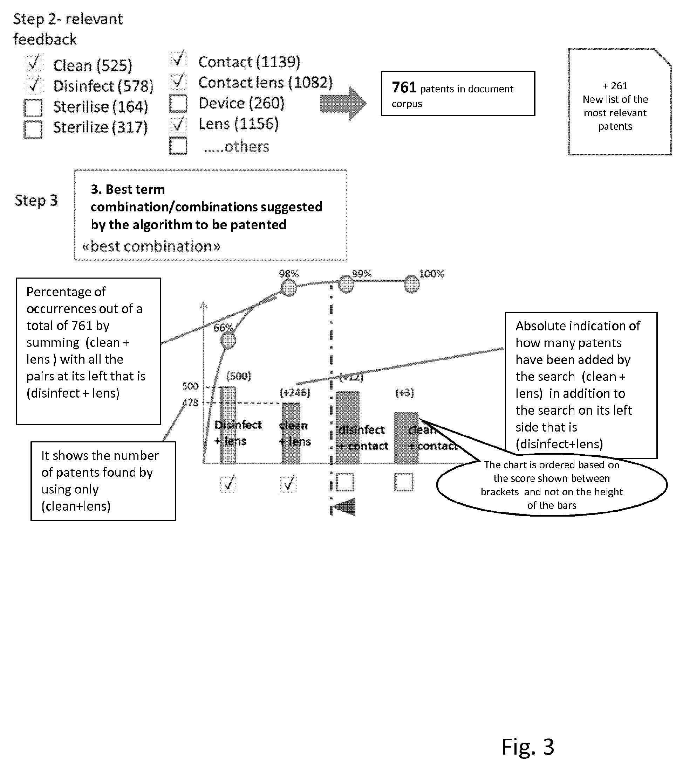

Figures 2 and 3 show an interactive graphical representation of the method step.

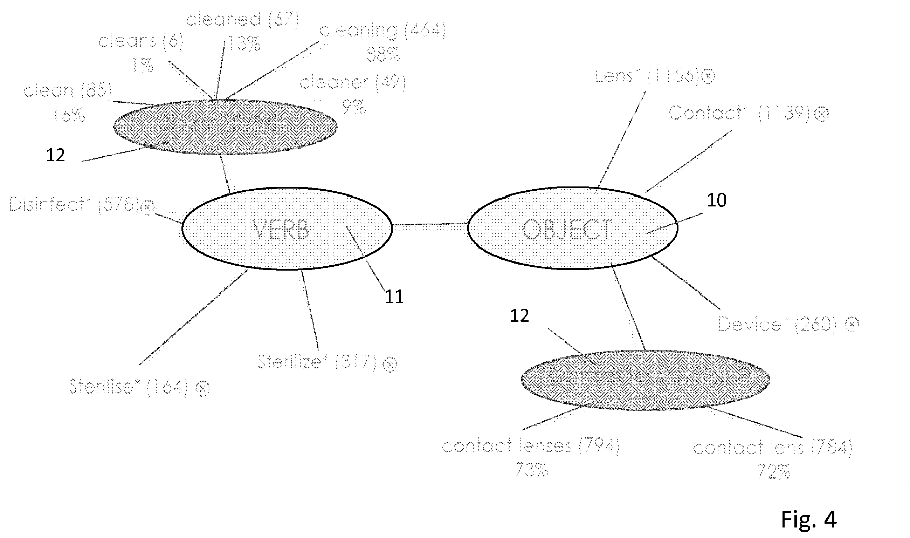

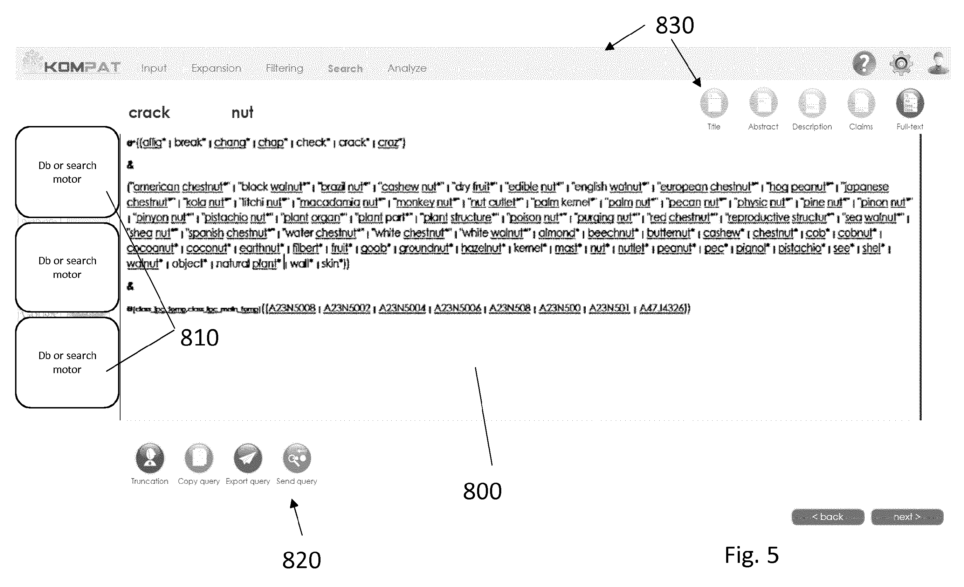

An alternative is shown in figures 4 and 5.

Figure 4 shows a bubble chart of the occurrences. The areas intended for the two terms Verb and Object are highlighted with relevant indications 10, 11, while the specific terms are inserted into bubbles 12 connected to the corresponding indication of the type of term 10, 11.

Figure 4 highlights the bubbles related to the term "clean" and "Contact lens". Besides each term, a number of the occurrences of said term within all the documents of the interrogated database.

The selection is performed for example by "pointing and clicking" the area corresponding to the bubble 12 of a computer screen by a mouse or another input device such as for example, the hand or a finger in the case of a touch screen.

Moreover by clicking on the bubble, such as for example shown for the term "clean", all the alternative terms defined by means of the expansion process for the term "clean" by conjugating it are shown with the number of their occurrences and the percentage with respect to the total number of occurrences of the term "Clean".

Likewise for the term "Contact lens" the expansion has given the singular and plural declensions.

Figure 5 shows a screenshot for the selection of the final query, in this case "Crack Nut" and the expansion of the term "Nut".

The area 800 shows the lists of words that can be selected. The buttons 810 permit the access to several document databases and/or to search motors, other button bars 820 and 830 allow functions of the system to be activated. At the following step 3, denoted by 300 in the diagram of figure 1, the pair of terms for verb and object is determined for which the highest number of occurrences is obtained in the documents within the database to be interrogated considering said terms in combination, i.e. not more only individually.

The output may comprise different lists such as shown at step 300 for example the list of only the relevant patents, the list of the added patents and/or the list of the removed patents denoted by 301, 302, 303.

The calculation of the expansion pairs and particularly of the verb-object or object-verb pairs alternative to the starting one is based on an approach replacing the verb-object pair in INPUT by means of a ranking algorithm that assigns to each pair alternative to the starting one a value proportional to the number of times the alternative pair appears in the pool of search documents, in this case of the patents of a database.

It is possible to use other ranking algorithms.

According to a variant embodiment for example the system calculates the winning pair among all the permutations of the V+O expansions. Therefore near each Object it shows as the score the number of documents obtained by a combination of Object and Verb of the winning pair.

A further alternative provides to calculate the score as the number of additional documents that would be found besides the winning pair by adding a selected Object.
Given the winning pair "Vwin + Obwin", then
Score Obj= (Vwin and (Objwin or Obj) not (Vwin and Objwin)

The same reasoning in a symmetric manner is used for giving the score to the verbs, i.e. by using the relations with the Object of the winning V+O pair:
Score V= (Objwin and (Vwin or V) not (Vwin and Objwin)

Thus the user always knows how many additional patents he/she would have if he/she launched a new search including that term suggested by the expansion, or vice versa how many he/she would lose by removing it.

The pairs appearing several times in the whole pool have a higher ranking.

According to an improvement, in order to prevent pairs such as "claims a device ..." from appearing, the results can be filtered by a stop word list for the most generic and recurrent terms in the patent field.

Such stop word list can be pre-defined by a specific library, or it can be dynamic, that is both managed by the user and automatically managed by the system with a statistical analysis of the pool of search documents.

The Verb+Object or Object+Verb pair is searched by the system by means of proximity operators within the same phrase, with or without the predetermined order, with a specific distance, within the same paragraph, in two consecutive phrases.

The Verb+Object or Object+verb pair is searched by the system by using the tagging associated to the words by a pre-processing by semantic parsers that are able to parse a phrase, assigning the grammatical/syntactic role of the terms composing it. Thus it is possible to filter more accurately all those patents wherein the words of the Verb+Object or Object+Verb pair do not appear with the role as a verb and object.

For example in the phrase "the cleaning solution deteriorates the lens" the term "cleaning" is not a verb that acts on the "lens" as in the phrase "the solution is cleaning the lens". A parser is able to easily distinguish all this and it will assign different tags to the word "cleaning".

Moreover the use of the parser allows also those patents wherein the words appear with different grammatical/syntactic roles even if expressing the same concept to be found. For example the active and passive form "the solution cleaned the lens" and "the lens is cleaned by the solution", even if in the first phrase "lens" is the object and in the second one is the subject, the expressed concept is the same.

The action expanding the pair can be performed both by expanding only the object and by keeping the verb stable, and vice versa by keeping the object stable and by expanding the verb. Such actions can be also combined in parallel or in sequence to generate alternative pairs wherein both the verb and the object are composed of alternative terms.

The expansion action is carried out by the system interrogating different libraries.

These latter can be as an alternative or in combination linguistic libraries such as for example: for the verbs the library of conjugations, substantivization and the singular-plural declension for the names, expansion libraries for the verbs containing hypernym, troponyms, entailments and derivative related forms and for the names hypernym, hyponyms, meronyms, holonyms and derivative related forms; technical libraries; list of words extracted by means of automatic analysis tools such as for example clustering.

In particular for the technical libraries for example they can be:
Libraries of PHYSICAL EFFECTS. The starting verb can be replaced by one of the verbs taken from a specific library of physical effects. For example when searching «sterilize lens», the system would replace "to sterilize" with a verb expressing a physical effect such as for example «heat lens».

Specific thesauri in the field for verbs or objects called in a jargonistic manner for example ophthalmic surface, bifocals.

Libraries of coordinate terms/sister words. A coordinate term is a term that shares a hypernym with another term.

For example coordinate terms of "contact lens" is "sunglasses", "eyeglasses", "spectacles".

According to a characteristic that can be provided separately or in combination it is also possible to use lists of words obtained from an automatic pre-processing of the pool of documents by a text analysis such as for example clustering.

The search pool can be delimited by only the Verb+Object or Object+Verb pair in the whole document corpus or it is possible to add one or more filters as in all the conventional searches (inventors, applicant, year, cpc, ipc, additional words to limit the number of results).

Considering only 1 starting query, the system will launch all the possible permutations among alternatives of verbs and alternatives of object. (Thousands of combinations that double, triplicate or quadruplicate if several proximity operators are used).

Therefore a hierarchy of the pairs is created on the basis of the occurrences.

The following table shows a search example in the pool A61L12 relative to the class of contact lens sterilization:

**INPUT: Verb= sterilize Object= contact lens**

| **Verb** | **Operator** | **Object** | **patents** |
|---|---|---|---|
| disinfect* | AND | contact* | 501 |
| disinfect* | AND | lens* | 500 |
| disinfect* | AND | contact lens* | 485 |
| clean* | AND | lens* | 478 |
| clean* | AND | contact* | 467 |
| clean* | AND | contact lens* | 457 |
| sterilize* | AND | lens* | 246 |
| sterilize* | AND | contact* | 239 |
| sterilize* | AND | contact lens* | 231 |
| sterilise* | AND | contact* | 129 |
| sterilise* | AND | lens* | 128 |
| sterilise* | AND | contact lens* | 122 |
| clean* | AND | device* | 121 |
| disinfect* | AND | device* | 97 |
| sterilize* | AND | device* | 93 |
| sterilise* | AND | device* | 52 |
| sterilize* | AND | object* | 32 |
| disinfect* | AND | object* | 25 |
| sterilise* | AND | object* | 23 |
| clean* | AND | object* | 21 |
| hygienise* | AND | contact* | 2 |
| hygienise* | AND | lens* | 2 |
| hygienise* | AND | contact lens* | 2 |

According to a further step, the system can filter out the non significant pairs on the basis of specific filters such as for example the already mentioned stop words and/or more evolved filters that operate on statistical analyses.

The following table shows the pairs removed during the operation filtering the previous table.

| **Verb** | **Operator** | **Object** | **patents** |
|---|---|---|---|
| hygienize* | AND | contact* | 0 |
| hygienize* | AND | lens* | 0 |
| hygienize* | AND | contact lens* | 0 |
| hygienize* | AND | device* | 0 |
| hygienize* | AND | object* | 0 |
| hygienise* | AND | device* | 0 |
| hygienise* | AND | object* | 0 |

Moreover the system suggests the pair with the higher ranking and contemporaneously it generates an additional report with infographics about the distribution of scores, statistics, diagrams supporting the query, as regards the set of words with the highest influence.

An example of a table can be the one where the variants are placed in a suitable matrix, in the first column the alternatives to the verb, and in the first row the alternatives to the name. The cells show the occurrences of each pair, that is the number of results.

According to a further characteristic, a similar matrix can be created on the basis of other algorithms that do not work on absolute numbers but on the number of incremental results with respect to the result of the v+o winning pair.

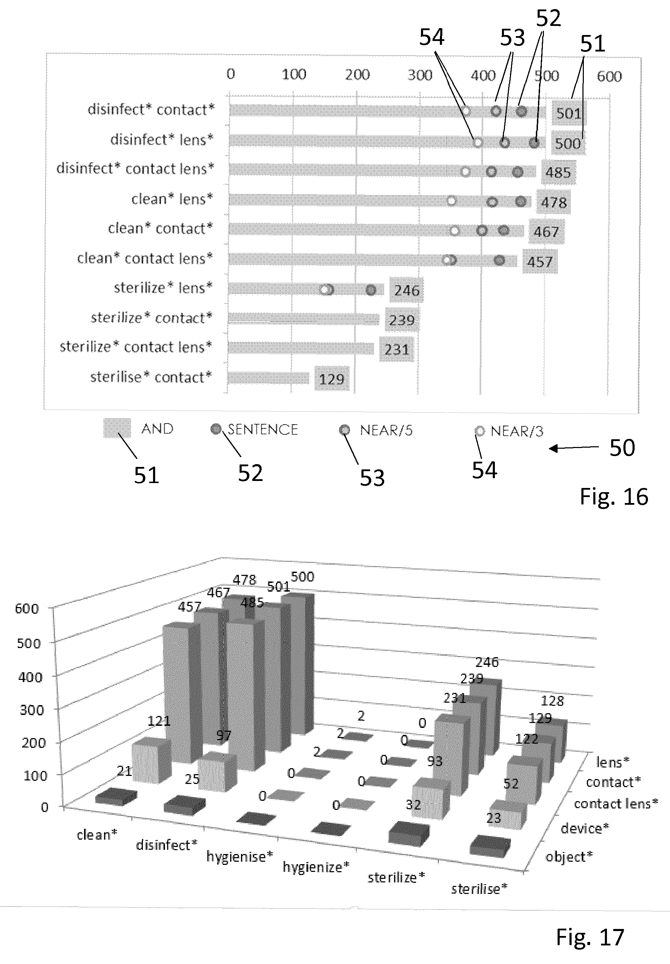

Two alternative output infographics examples are shown in figures 16 and 17.

These figures show that for each verb+object pair, but also possibly for object+verb pairs, the occurrence of said pair is shown within the documents of the interrogated database.

With reference again to the term expansion method, according to an advantageous improvement characteristic, the method and the system provide to use libraries of physical effects. Once a final query is obtained, that is a verb+object pair for which the occurrences are the highest ones, according to the present invention it is possible to use a library of physical effects for further relating the term defining the physical effect related to the verb and therefore to launch again the query.

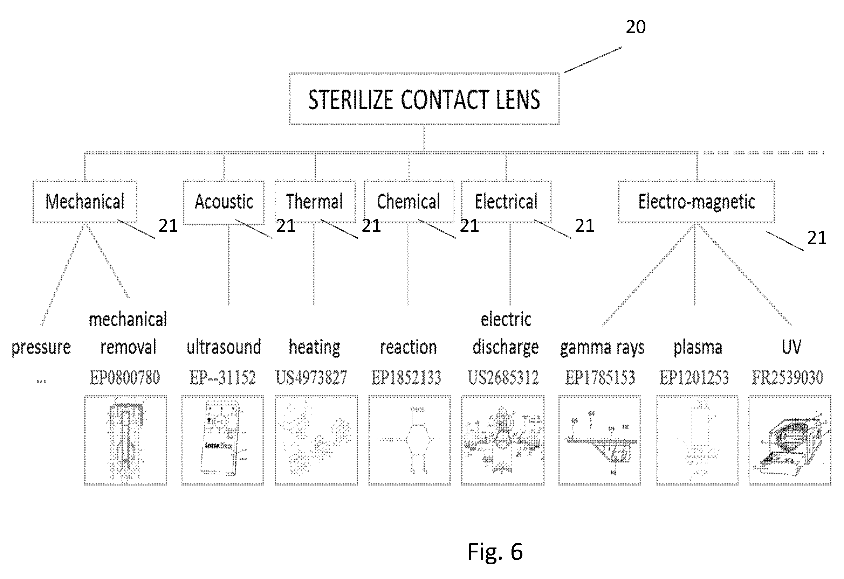

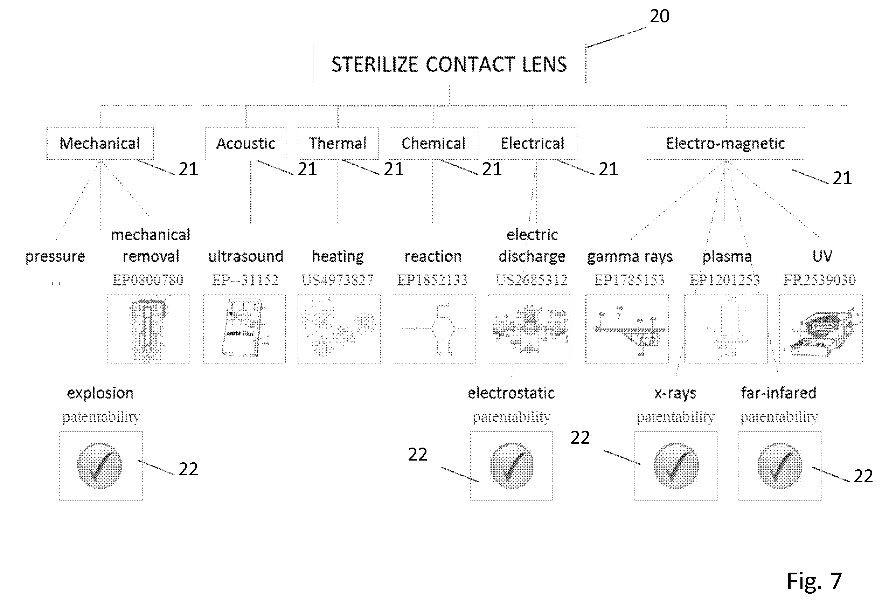

Figures 6 and 7 show the output screenshot of such expansion by means of libraries of physical effects.

The used query is shown in the upper window 20, while in the windows 21 below it the physical effects are listed. To each physical effect a term is associated that expresses the manner carrying out the effect for the action defined by the verb object pair and for each of such terms defining the manners applying the physical effect, the corresponding documents are shown, in this case the patents containing occurrences of the physical effect.

The user can interact with such screen that represents the library of the effects applied to the query and can select one or more of the techniques of application of the physical effect. Moreover as it results from figure 7 the graphical interface, as denoted by 22, shows application technologies for one or more physical effects for which the technical field does not provide patents or patent applications yet, that is there is no document that describes it thus showing to the user potential not exploited niches and where there are no protection patent tools.

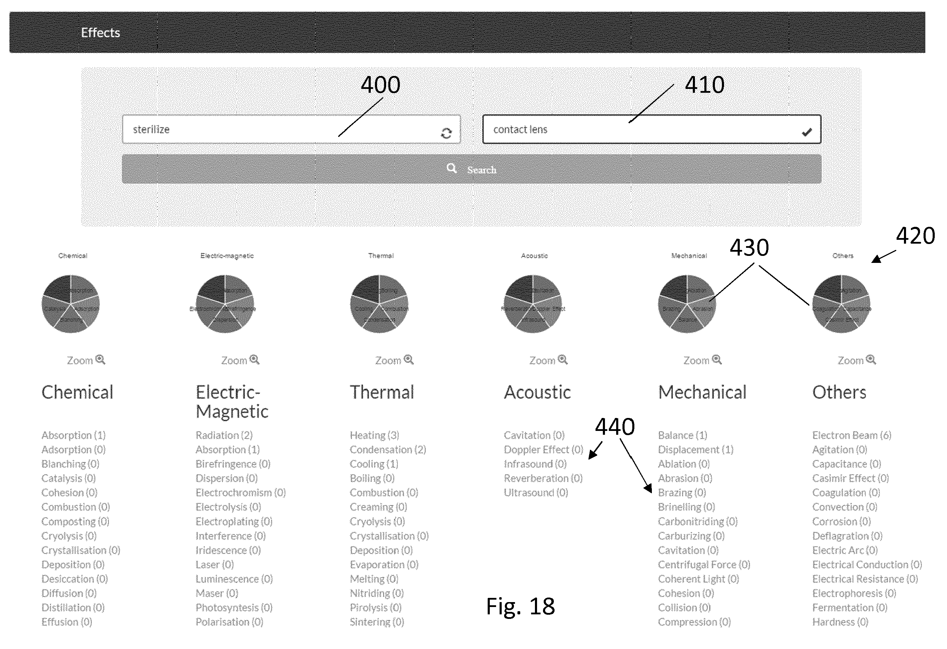

Figure 18 shows an alternative example of the interface for the module of the database of effects.

The graphical interface provides two input interfaces 400 and 410, one for the verb and one for the object respectively of the selected object plus verb pair. A control bar for the search function and an output area showing a column 420 for each type of technical effects defined with reference to the field of physical and chemical effects. The type is the title of the column. Each column 420 further has a graphical representation 430 of the histogram type, or pie chart type or the like wherein sub-groups of more specific effects are shown, falling within the general field and their relative numerical distribution is shown. Finally there is provided also a more detailed list of the individual possible physical effects detected for the entered verb+object combination and besides it the number of present document. As denoted by lists 440.

The individual areas of the chart as well as the individual items of the lists 440 can be active commands for opening the corresponding documents or a folder containing the corresponding documents.

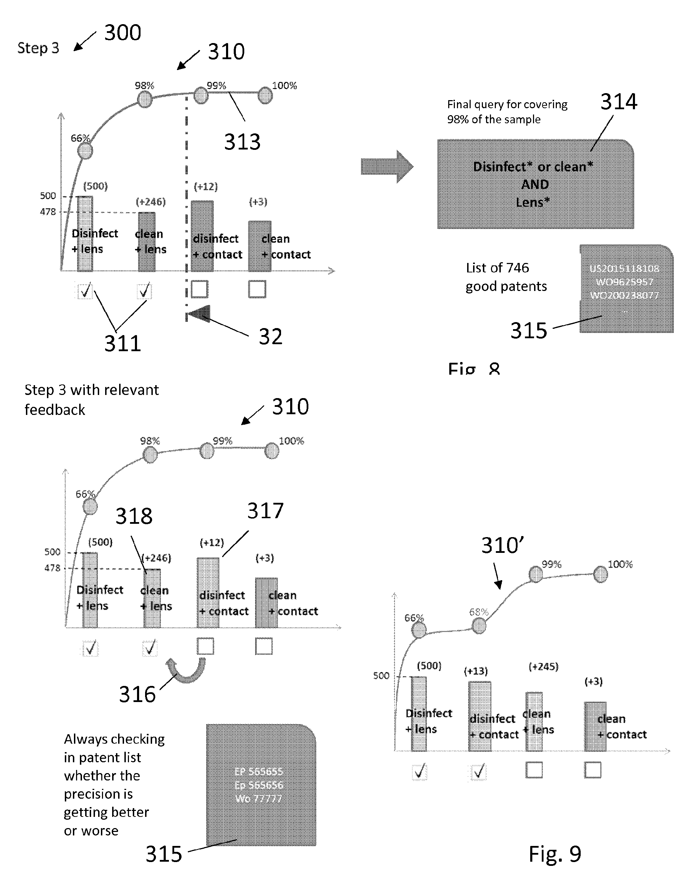

According to a characteristic of the invention shown in the two variants of figures 8 and 9 and 10 to 15 it is possible for the results to be represented in a page composed of interactive charts that help in reformulating the query by suggesting new terms for expanding or replacing it, by displaying the number of results that can be obtained by each one of the suggested terms or by a series of combinations thereof and by displaying the results of the search with interactive infographics. By interacting with the infographics the query can be modified and the system automatically calculates again the results as regards the occurrences. A suitable page of the screen always shows the first results of the search, which can be selected with different manners such as for example ordered by relevance or by showing the results that have changed due to the last modification to the query, or on the contrary by showing only the patents removed from the pool due to the last modification made (see also the flow chart of figure 1 and figure 3 at reference numerals 301, 302, 303 or for the second step of the method at number 203, 204, 205).

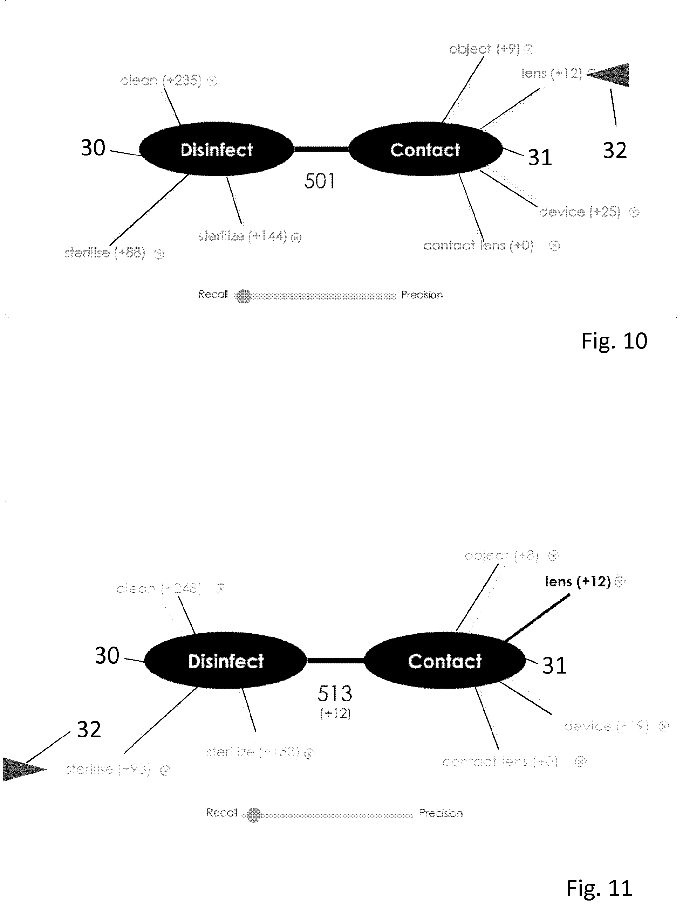

With reference to the variant of figures 10 to 15, an interactive graphical interface for the automatic representation of the words most important for the search is shown. In the center there is the winning pair, that is the pair of terms with the highest number of occurrences such as denoted by 30 and 31. Under the two terms the number of occurrences is shown.

Each bubble 30, 31 containing the verb and the object of the winning pair is connected to the expansion words with the number of additional patents that they carry coupled to the reference word. For example by selecting Clean (+32) other 32 patents would be added to the 501 patents where the Disinfect + Contact pair occurs for the Clean OR Disinfect AND Lens (CLEAN or Disinfect AND contact) string.

The example shows the selection of lens and therefore of Disinfect AND Contact And Lens pair. By clicking with the pointer of the mouse represented by the triangle 32 on the term lens 12 patents where the term contact lens occurs are added to the 501 patents of the Disinfect plus Contact pair and the relevant document pool rises to 513 such as shown in figure 11.

The addition of the term Lens and of the patents where it occurs is shown by the black printing of the term Lens (+12).

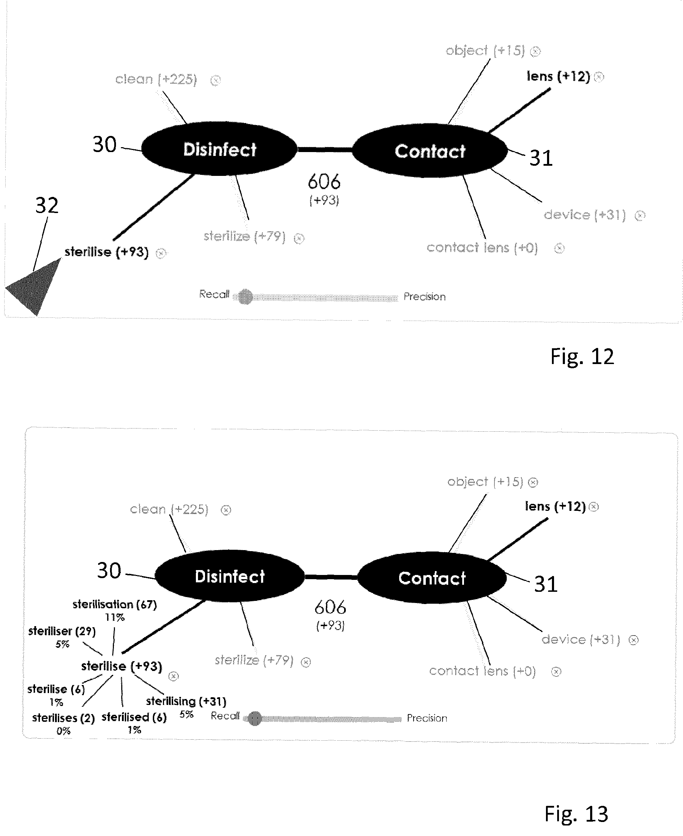

Similarly it is possible to generate an expansion at the verb side such as shown in figure 12.

In such figure, the pointer 32 selects the expansion term "sterilize" that adds (+93) documents. Therefore by adding to the Disinfect+Contact pair, the term Lens for the object and the term Sterilize for the verb the number of relevant documents rises to 603.

Such as shown in figure 13, it is also possible to expand the term sterilize. In this case, for example a double click or the activation of a drop-down menu having several selection options and the selection of a predetermined option allow the term sterilize to be expanded interrogating a library of the conjugation of the verb sterilize. The individual conjugated terms are shown on the screen associated to the number of occurrences and to the percentage value thereof with reference to the total occurrences for the term sterilize.

By such function, by clicking on sterilize, it is possible to see the contribution given to the (steriliz* OR disinfect AND (contact OR lens)) query by all the conjugated forms and also by the substantivizations of the term.

Each alternative conjugated term in turn can be further expanded.

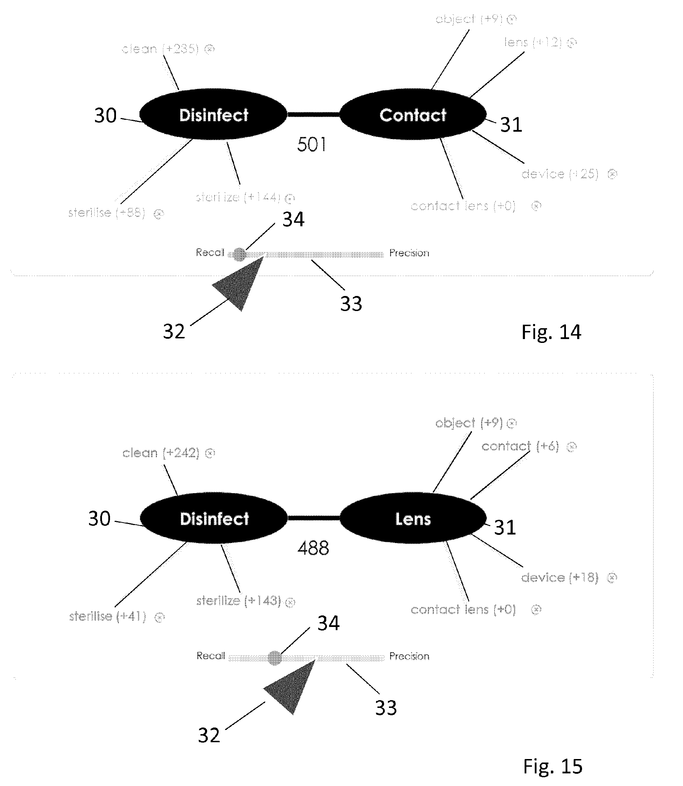

Figures 14 and 15 show on the contrary the functionality of the recall bar 33. By such bar it is possible by acting with the mouse pointer 32 on a cursor 34 of the recall bar 33 to modify the recall precision of the relevant documents.

By moving the cursor 34 it is possible to change the recall performance for optimizing the precision or vice versa.

As already pointed out, the problem is that on one side the greater the range of the extension is the more effective the recall increase on the basis of a query expansion is and that said range increases by adding expansion terms by an OR operator. On the other side the use of the query expansion inevitably causes noise and affects the precision. The optimization of the precision requires low noise in the results.

A solution to such trade off problem is already automatically provided by the invention by considering the terms not only individually, but the occurrence of the verb + object pairs.

The V+O or O+V pair is the minimum search form, it can, by itself, already improve searches since it is a disambiguation tool that gives a precise role to the meaning of the verb, limiting the range of the function and defining whether the target is the searched one or whether the patent is not relevant.

However for a fine adjustment of the compromise between high recall and high precision in identifying the relevant documents, by acting on the bar 33 it is possible to modify the relation between recall and precision to the advantage of one thereof and to the detriment of the other one.

Such as shown in figures 14 and 15 the movement of the cursor 34 from the end where the recall is maximum to the end where the precision is maximum changes the number of relevant documents of the list that pass from 501 in the setting condition of figure 14 to 488 in the condition where the precision has increased by the bar 33 to the detriment of recall.

It has to be noted that the recall cursor changes the verb + object pair by replacing the term contact with the term lens in bubble 31 that is by selecting the verb + object pair that provides lower performances as regards recall but higher performances as regards precision.

Figures 8 and 9 show a different interactive graphical representation interface but it allows the same function to be carried out.

In the chart 310 of step 3 the occurrences provided by each pair determined by the expansion are shown as an interactive histogram. The number of relevant documents is shown at the top of the corresponding bar of the histogram and each bar is associated to each verb + object or object + verb pair.

The bars can be selected by means of a selection box 311 associated to each bar of the histogram. Moreover to each bar there is associated an indication of the percentage of documents corresponding to the query represented by said bar with respect to the total number of documents of the pool, that is of the database to be interrogated.

It is possible to activate the queries of the individual bars by placing a check. A line separating the checked bars from the unchecked bars is shown which cuts the curve 313 connecting the percentages of each bar by indicating the percentage of the recalled documents with respect to the total number of documents in the database corresponding to the sum of the documents recalled by each checked query.

As an alternative it is also possible to make the line interactive such that by moving said line separating the checked bars from the unchecked bars by the action of the pointer 32 it is possible to carry out and modify the selection.

By checking the Disinfect+Lens and Clean+Lens query a recall equal to 98% is obtained and the final query selected in this manner is denoted by 314 by Disinfect* or Clean* AND Lens*. The list of relevant patents for these queries is shown in 315 and it comprises 746 documents.

The example of figure 9 shows how recall and precision can be replaced and modified.

Such as shown by the arrow 316 in the histogram 310 of figure 8, the bar associated to the Disinfect+Contact query denoted by 317 is moved to the place of the bar 318 associated to the Clean+Lens query.

As regards the recall the result is shown in the histogram denoted by 310'. The number of relevant documents has decreased by 245 units and it is only the 68% of the total number of patents in the database by considering the two selected queries Disinfect+lens and disinfect+contact.

The list 315 is controlled in order to verify whether the precision is getting better or getting worse.

With reference again to the representation of the interactive ranking list of the several queries, it is possible also to provide a step testing the stability of the result.

Such test can be carried out by comparing the ranking obtained with different distance operators of the two terms in the verb+object pair or object+verb pair. As the distance operators it is possible to use as an alternative or in combination AND, SENTENCE, NEAR/5, NEAR/3 operators and others or others. Depending on the operator, therefore the search can be carried out only within the same phrase, the same paragraph, or it can be a search for words with a variable distance, in the predetermined order or in any order.

In the figure the single operators are listed in the operator bar 50 and are reproduced in the occurrence ranking measurement bar. The figure has to be read such that the icon 51, 52, 53, 54 corresponding to the specific distance operator is placed on the occurrence number bar in the position corresponding to the occurrence of the pair of terms at the distance defined by the specific operator.

As it is clear from figure 16, "Disinfect+Contact" combination is the best one with operator AND, while with the operators SENTENCE, NEAR75, NEAR3 the best one is "disinfect+lens".

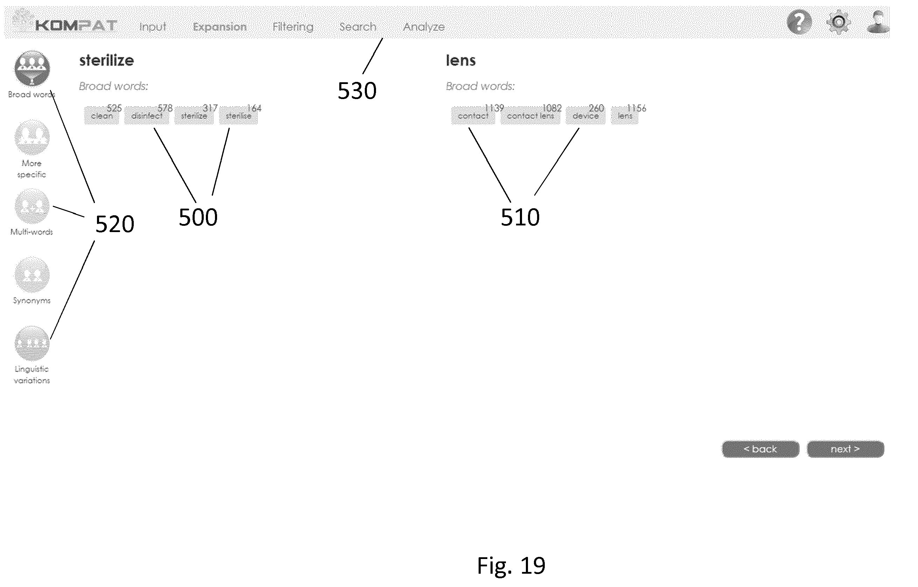

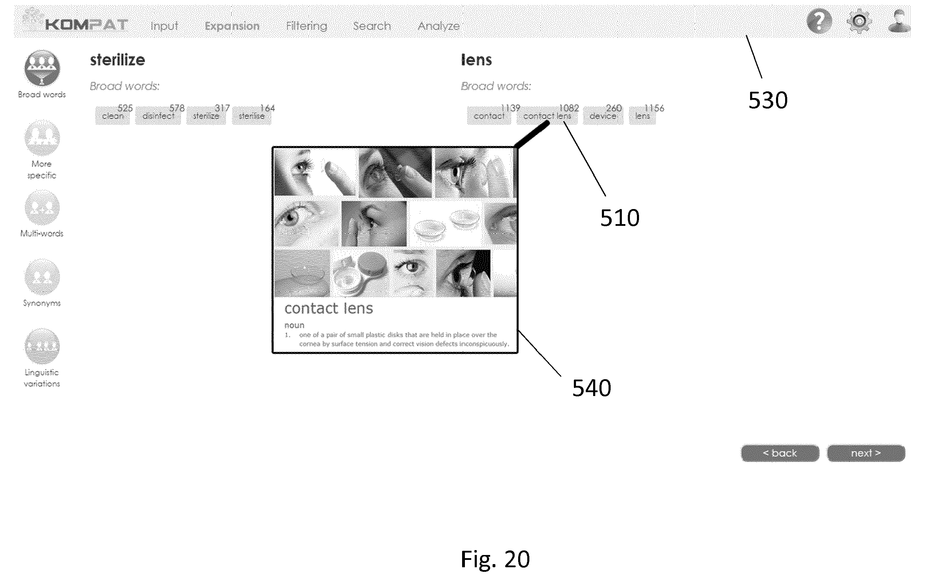

Figures 19 and 20 show a variant of the graphical interface where the words suggested for the expansion are shown, such as denoted by 500 and 510 in the figures, for the verb and the object respectively. To each area 500, 510 for each word there is associated the numerical value of the occurrences of said words. The areas 500, 510 associated to the words are active and the placing of the pointer on each word gives the access to additional information such as for example a list of images associated to such word that immediately gives the visual idea of its meaning or meanings and a list of all the meanings the word has in the dictionary or in other languages (e.g. French or German). Figure 20 shows an example of a popup window 560 that opens by placing the pointer on the area dedicated to the word "contact lens".

Thus it is possible to be aware of how much noise one risks to carry by adding such word to the list of words for the expansion.

By such approach it is possible to warn the user, by changing the colour of the cell or the like, about the danger of a word in losing precision based on the number of other meanings.

With reference to the example of figure 19, 520 denotes buttons for activating expansion and filtering functions that can be activated separately or in combination with one another and that modify the shown output, that is the number of words shown in the areas 500 and 510, and therefore also the number of such areas.

In the upper bar 540 there are the graphical buttons for executing the several method steps, while on the same bar on the right there are the buttons for retrieving help and setting functions and in this case also login function.

## Claims

1. Method for the automatic reformulation of search keyword strings (query) in document search systems that comprises the steps of:
formulating the query in a functional manner in the form of verb + object pair or object + verb pair in a natural human language;
carrying out a step expanding the verb + object pair or the object + verb pair consisting in the automatic analysis of said pair and in calculating the verb + object or object + verb alternative pairs;
generating a set as a list or the like of verb + object or object + verb alternative pairs;
creating a ranking of said pairs by assigning a weight to each pair, which weight is determined on the basis of the occurrence of the individual pair in the documents identified by carrying out the search on the basis of at least one of said pairs;
generating a query with a number of alternative terms as regards the object and/or the verb that in the condition matched with each other produce the highest number of document occurrences, that is documents having such pair and that can be freely selected and matched by the user;
generating a user graphical interface showing the pairs of terms "object" and "verb" generated at the previous step and/or the verb + object or object + verb alternative pairs generated at the previous step in the form of graphical entities that can be selected and used as document search input queries.

2. Method according to claim 1, wherein with an input as V+O or O+V a new query is produced with a number of terms that can be selected by the user and that provides only those terms that once suitably matched with the respective verb and corresponding expansion (for objects) or object and corresponding expansion (for verbs) produce the highest number of occurrences.

3. Method according to claim 1 or 2, wherein said method provides as the INPUT a user query composed of 2 words (a verb and an object or an object and a verb) and as the OUTPUT a sequence of at least 2 words (verb+object or object + verb + other possible ones) that replace the input words since potentially more relevant to the desired search on the basis of the weights corresponding to the occurrences of the modified input word pairs.

4. Method according to one or more of the preceding claims, wherein there is provided a step improving the precision in finding documents relevant to the query in which step alternatively or in combination one or more of the following filters can be added: semantic filters such as parser, more selective filters such as Stop words, filters with text mining tools (tdf/idf and the like) or combinations thereof.

5. Method according to one or more of the preceding claims, wherein as regards the so called query expansion, namely defining the alternative terms for the verb and/or the object, it is carried out on a criterion replacing the V+O pair or O+V pair in INPUT by a ranking algorithm that assigns, to each pair alternative to the starting one, a value proportional to the number of times the pair appears in the document pool of the search database since a weight, that is a higher ranking, is assigned to the pairs that appear more times in the whole document pool of the searched database.

6. Method according to one or more of the preceding claims, wherein the verb and object pairs or vice versa are selected by the user, manually, from a list of homonyms with different semantic meanings and then on the basis of the interrogation of one or more libraries which are selected among one or more of the following alternatives:
Linguistic libraries, for the verbs the library of conjugations, substantivization and the singular-plural declension for the names, expansion libraries for the verbs containing hypernym, troponyms, entailments and derivative related forms and for the names hypernym, hyponyms, meronyms, holonyms and derivative related forms; technical libraries; Libraries of PHYSICAL EFFECTS for which the starting verb can be replaced by one of the verbs taken from a specific library of physical effects; specific theasauri in the field for verbs or objects called in a jargonistic manner; libraries of coordinate terms/sister words.

7. Method according to one or more of the preceding claims, wherein the step displaying the output comprises the generation of a list of pairs composed of the several permutations of alternative terms of verb and/or alternative terms of object for the verb+object and/or object+ verb pair in which list the pairs according to the several permutations are hierarchically ordered on the basis of the number of occurrences measured in the set (pool) of documents of the interrogated database and the generation of a graphical report showing the pair with the highest ranking and contemporaneously or alternatively, automatically or by a selection, infographics of the distribution of ranking scores for the individual pairs, statistics, charts supporting the query are generated as regards the set of words having the highest influence.

8. Method according to claim 7, wherein the graphical report is an interactive graphical interface for helping in the reformulation of the query terms, that is the verb+object or object+verb pairs, by suggesting new terms expanding the pairs composing the query and by showing the occurrences thereof in an interactive chart, the alternative terms being determined by the process expanding the object and/or verb, which can be selected as a part of the query by modifying the query, while a step is automatically carried out for calculating again the results in terms of occurrences.

9. Method according to one or more of the preceding claims wherein there is provided the automatic modification of the terms of the query on the basis of indications increasing/reducing recall performances and/or increasing/reducing the precision set by graphical tools for setting said performances and said precision, which modification of the query automatically selects the verb+object pair together provides the desired value of the recall performance or precision.

10. Method according to one or more of the preceding claims, wherein there is provided a step testing the ranking given to the verb+object or object+verb pairs that have obtained the highest number of occurrences, said test step considering the occurrences in relation to predetermined proximity operators for the terms of the pair of terms.

11. Tool for the automatic reformulation of search keyword strings (query) in search document systems according to one or more of the preceding claims, wherein said tool is in the form of a computer program executable by said computer and as a routine for defining the query in a system searching documents in a document database and/or for mapping patents or other documents.

12. System for searching documents in a document database and/or for mapping patents or other documents comprising a tool according to claim 11.
